# EUROPEAN PATENT APPLICATION

(11) **EP 1 168 210 A1**
(43) Date of publication of application: **02.01.2002**
(21) Application number: 00311434.5
(22) Date of filing: 20.12.2000
(51) Int. Cl.: G06F 17/60

(54) **Digital contents advertisement display system using auction**

(30) Priority: 30.06.2000 JP 2000198544
(71) Applicant: FUJITSU LIMITED, Kawasaki-shi, Kanagawa 211-8588 (JP)
(72) Inventor: Arai, Masatoshi, c/o Fujitsu Limited, Kawasaki-shi, Kanagawa 211-8588 (JP); Kitagawa, Eiji, c/o Fujitsu Ltd, Kawasaki-shi, Kanagawa 211-8588 (JP)
(74) Representative: Stebbing, Timothy Charles

(57) **Abstract**

A digital contents advertisement display system using auction includes: a contents outline disclosing part 1 for disclosing an outline of contents distributed through a digital medium to an indefinite number of audience including sponsors; an advertisement tenant bidding part 2 for allowing a sponsor to bid for an advertisement tenant contained in the disclosed contents; a sponsor determining part 3 for knocking down the advertisement tenant to a sponsor that has bid a highest price; a contents creating part 4 for correcting the advertisement tenant contained in the contents in accordance with requests from the sponsor, and completing the contents; and a contents distributing part 5 for distributing the completed contents, wherein the contents have a function as an advertising medium.

## Description

The present invention relates to an advertisement display system for determining a sponsor of an advertisement tenant contained in contents of a medium capable of transmitting/receiving a digital image, such as the Internet and a digital TV, by auction. In particular, the present invention relates to an advertisement display system in which the degree of attention to advertisement is adjusted by using an advertising character.

With the widespread use of a network system for transmitting/receiving digital data, such as the Internet and a digital TV, and the advancement of a multimedia processing technique, computer-using technology, in which a user retrieves digital data from a network and displays it on a display apparatus, has also made great strides. In particular, with the spread of the Internet to ordinary households, commercialization of digital broadcasting, etc., the time is now ripe to utilize the digital network medium as an advertising medium due to the appealing power thereof.

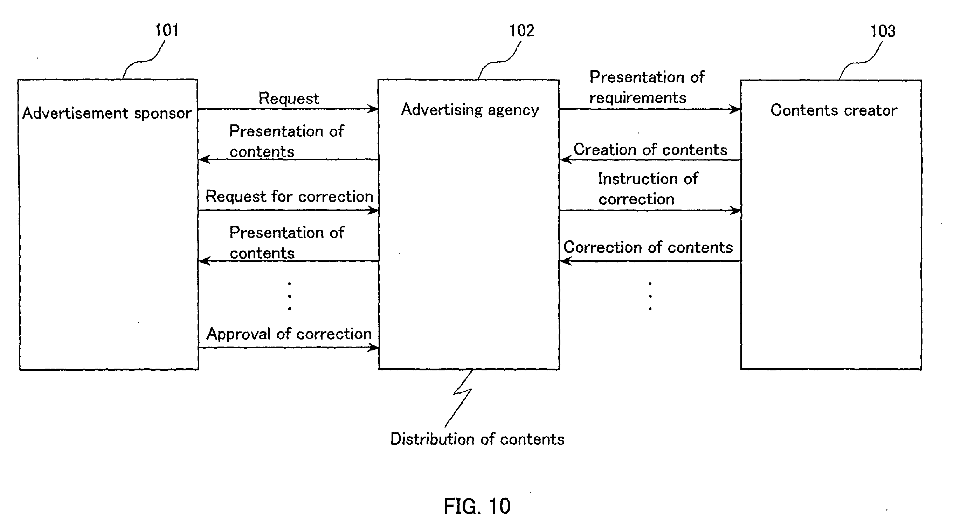

For example, Figure 10 shows a model for providing advertisement by TV broadcasting in the prior art. In Figure 10, in order to provide advertisement by TV broadcasting, etc., an advertising agency 102 is always required. This makes it difficult for the intention of an advertisement sponsor 101 to be exactly passed to a contents creator 103, and in most cases, there needs to be considerable amount of time and cost for attaining contents that satisfy the advertisement sponsor 101.

Further, in the Internet and TV broadcasting, contents such as games and dramas are not particularly intended for providing advertisement. Therefore, it is routine to advertise articles, services, and the like provided by an advertisement sponsor, by inserting commercial contents between contents (i.e., games, dramas, etc.), describing an article name in a banner or the like in a peripheral portion of a screen on which contents are provided.

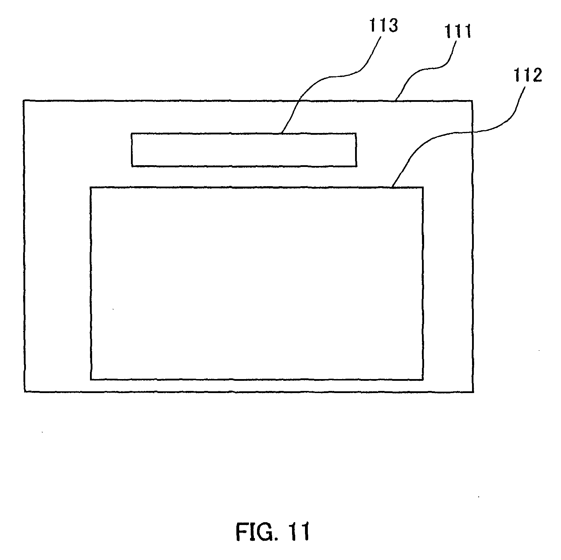

For example, as shown in Figure 11, in a display region that is not overlapped with a contents display region 112 on a display screen 111, an article name, a service name, or the like is often emphasized by using a banner 133 or the like, or a link function to a corresponding home page is often set.

However, the above-mentioned conventional advertising method has the following problems.

First, according to the conventional digital broadcasting, since an audience is likely to skip commercial contents, it is assumed that the audience may not see the commercial contents, and advertising effects cannot be expected. More specifically, what the audience desires is strictly to get digital contents, so that they hardly pay attention to the presence of commercial contents.

Second, in order to distribute commercial contents by the conventional method, an advertising agency is always required. More specifically, it is routine that requests of an advertisement sponsor are organized by an advertising agency, and commercial contents are created in accordance with the requests. This makes it complicated to harmonize the opinions between the commercial contents creator and the advertising agency, and there needs to be a higher advertising cost than necessary.

Therefore, with the foregoing in mind, it is an object of the present invention to provide a digital contents advertisement display system using auction that allows an advertisement sponsor and a contents creator to directly deal with each other, and enables an advertising cost to be laid down in accordance with advertising effects.

In order to achieve the above object, the digital contents advertisement display system using auction according to the present invention, includes: a contents outline disclosing part for disclosing an outline of contents distributed through a digital medium to an indefinite number of audience including sponsors; an advertisement tenant bidding part for allowing a sponsor to bid for an advertisement tenant contained in the disclosed contents; a sponsor determining part for knocking down the advertisement tenant to the sponsor that has bid a highest price; a contents creating part for correcting the advertisement tenant contained in the contents in accordance with requests from the sponsor, and completing the contents; and a contents distributing part for distributing the completed contents, wherein the contents have a function as an advertising medium.

Because of the above structure, a contents distributor can directly deal with an advertisement sponsor. Therefore, a contents distributor can expect an appropriate income for advertisement, and an advertisement sponsor can cut an intermediate cost. Further, a bidding price of an advertisement sponsor can be earmarked for a part of a distribution fee of contents, so that a general audience can receive contents at a relatively low price.

Further, it is preferable that the digital contents advertisement display system using auction according to the present invention includes a function of receiving an input from an audience and allowing the audience to influence a scenario process of the contents. This is because the same effects can be expected even in bidirectional digital TV and the like.

Further, in the digital contents advertisement display system using auction according to the present invention, it is preferable that, in a case where an advertisement tenant is not determined in the sponsor determining part, the contents distributing part distributes the contents by using the advertisement tenant in the contents provided by default. This is because the distribution of contents is ensured even in a case where an advertisement tenant is not determined.

Further, it is preferable that the digital contents advertisement display system using auction according to the present invention further includes an advertisement tenant attention degree control part for changing a display of the advertisement tenant so that a degree of attention to the advertisement tenant in the contents is changed in accordance with the bidding price. This is because the advertising effects with respect to the advertising cost of the advertisement sponsor becomes clear by varying the advertising effects in accordance with the bidding price.

Further, it is preferable that the digital contents advertisement display system using auction according to the present invention further includes a character control part for controlling behavior of a character displayed on a screen in accordance with a bidding price by the sponsor, wherein the character behaves so that an audience pays more attention to the advertisement tenant for which the bidding price is high. This is because the advertising effects can be easily expected in accordance with the bidding price by controlling the behavior of a character.

Further, it is preferable that the digital contents advertisement display system using auction according to the present invention further includes an access log recording part for recording an access log with respect to the character, and an attention degree calculating part for calculating a degree of attention to the advertisement tenant based on the access log recorded in the access log recording part, wherein advertising effects can be measured based on the calculated degree of attention to the advertisement tenant. This is because the information on the advertising effects is fed back to the advertisement sponsor.

Further, in the digital contents advertisement display system using auction according to the present invention, it is preferable that, in a case where the contents are redistributed, advertisement sponsors of the advertisement tenant are auctioned again. This is because an opportunity of reviewing the advertising effects is given to the advertisement sponsor during redistribution.

These and other advantages of the present invention will become apparent to those skilled in the art upon reading and understanding the following detailed description with reference to the accompanying figures.
Figure 1 is a block diagram of a digital contents advertisement display system using auction in Embodiment 1 of the present invention.
Figure 2 illustrates an idea of advertisement tenants in the digital contents advertisement display system using auction in Embodiment 1 of the present invention.
Figure 3 illustrates a data structure of bidding information in the digital contents advertisement display system using auction in Embodiment 1 of the present invention.
Figure 4 is a block diagram of a digital contents advertisement display system using auction in Embodiment 2 of the present invention.
Figure 5 is a block diagram of the digital contents advertisement display system using auction in Embodiment 2 of the present invention.
Figure 6 is a block diagram of an advertisement effect calculating part in a digital contents advertisement display system using auction in Embodiment 3 of the present invention.
Figure 7 illustrates a data structure of a character access log database in the digital contents advertisement display system using auction in Embodiment 3 of the present invention.
Figure 8 is a flow chart showing processing in the digital contents advertisement display system using auction in the embodiment of the present invention.

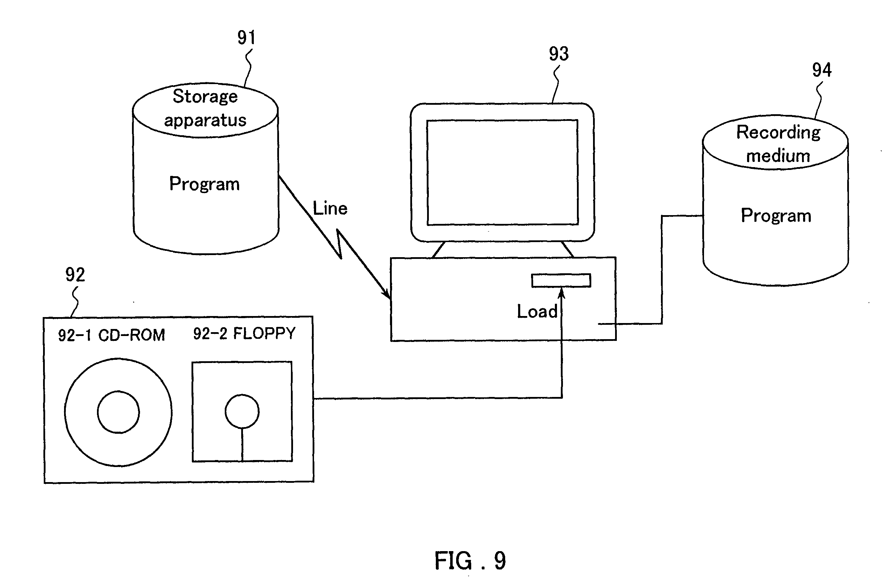

Figure 9 illustrates recording media.
Figure 10 shows a schematic structure of a conventional digital contents advertisement display system.
Figure 11 illustrates a conventional banner display.

Hereinafter, a digital contents advertisement display system using auction in Embodiment 1 of the present invention will be described with reference to the drawings. For convenience of description, it is assumed that contents to be provided are a drama having a fixed scenario. It should be noted that the contents do not necessarily require a scenario.

Further, a character in the present embodiment refers to an idea including general things, and includes an artificial creature and the like that are artificially created, as well as a car, a TV, and other things.

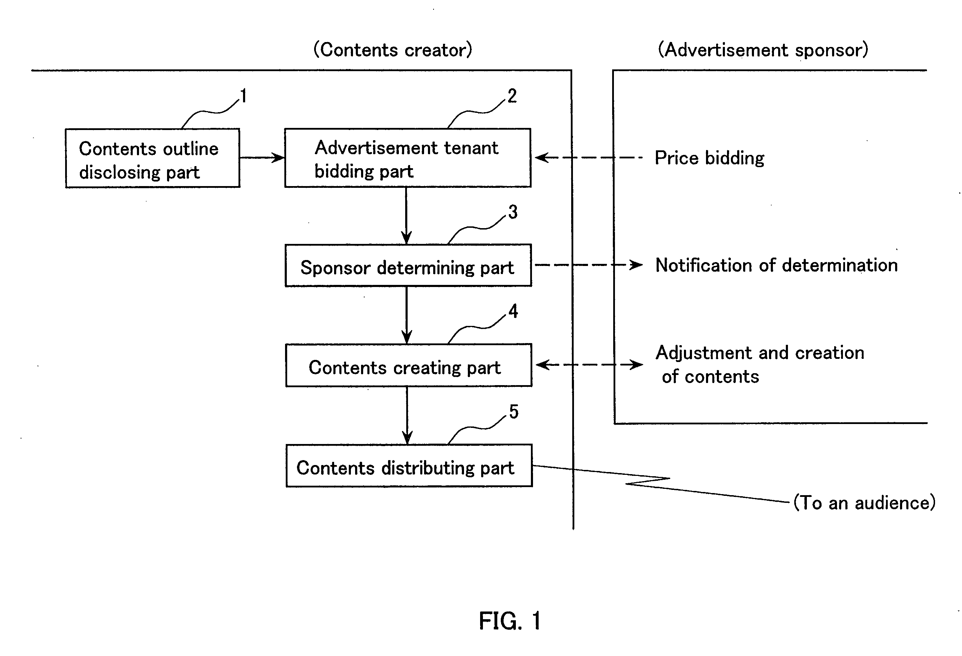

Figure 1 is a block diagram of a digital contents advertisement display system using auction in Embodiment 1 of the present invention. In actual implementation, components shown in Figure 1 may be composed of dedicated devices. It may also be possible that processing steps are described as computer software using a CPU, a memory, and the like.

In Figure 1, reference numeral 1 denotes a contents outline disclosing part for disclosing digital contents on a network. It is intended that a contents creator (generally, a contents creating company, etc.) invites advertisement sponsors with respect to its own contents, and the advertisement sponsors pay an advertising cost to the advertisement sponsor, whereby a cost for distributing advertisement to a general audience is suppressed.

Herein, the contents disclosed by the contents outline disclosing part 1 are not the entire contents, but only an outline such as a digest. More specifically, the contents outline disclosing part 1 merely announces what kind of contents are to be distributed. Because of this, advertisement sponsors can be widely sought without particularly setting the limit of an audience. Further, contents are not rendered obsolete to a general audience, and the audience may be more interested in the contents during distribution thereof, so that the enhancement of advertising effects can be expected.

Further, the disclosing method is not particularly limited to publication in a home page on the Internet, a download service of a file, and the like. Any methods may be used as long as an indefinite number of audience can gain access without any particular limit and confirm the contents. It should be understood that an access limit may be set depending upon the contents.

Reference numeral 2 denotes an advertisement tenant bidding part for presenting a price at which an advertisement sponsor desires to provide advertisement with respect to an advertisement tenant shown in the disclosed outline of contents. Herein, an advertisement tenant refers to a billboard shown in the outline of contents, articles such as a car and a magazine used in the contents, or a character used in the contents.

More specifically, the advertisement tenant used in the contents may have its display character and the like updated, depending upon the requests of an advertisement sponsor, whereas the scenario of the contents remains the original one and is not updated. Accordingly, bidding is conducted, predicated on that an exposure frequency of each advertisement tenant in the contents is nearly equal to that of the disclosed outline of contents.

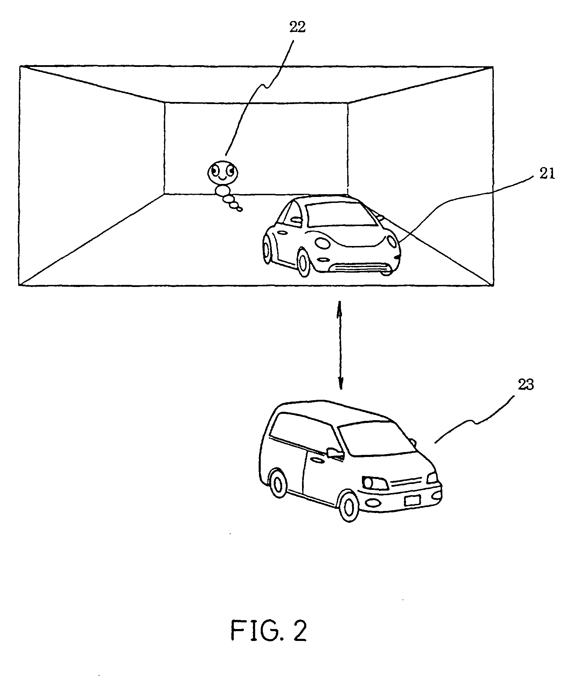

For example, a car 21 and an artificial creature 22 used as tools of the contents are displayed on a screen as shown in Figure 2. In this case, the car 21 and the artificial creature 22 are advertisement tenants. For example, in the case where a car provided by an advertisement sponsor, which has won the car 21 by bidding, is a car 23, contents in which the car 21 is replaced by the car 23 will be distributed.

In actual bidding, in the case where the disclosed outline of contents is displayed on a screen of a display apparatus, when a user selects an advertisement tenant displayed on the screen by clicking with a mouse or the like, a price input screen is displayed together with the disclosure of the information on an exposure frequency and the like of the advertisement tenant in the entire contents, and a guaranteed period during which the advertisement tenant is provided as a commercial. The information on an exposure frequency and the like of the advertisement tenant is stored as auxiliary information of the advertisement tenant in the outline of contents.

Next, reference numeral 3 denotes a sponsor determining part for determining an advertisement sponsor, which has bid the highest price for the advertisement tenant, to be a sponsor of the advertisement tenant, and notifies the advertisement sponsor of the determination. More specifically, the sponsor determining part provides the right of user of the advertisement tenant to an advertisement sponsor that has bid the highest price among those which have bid for the advertisement tenant during a predetermined bidding period.

Because of the above, a contents creator can directly deal with an advertisement sponsor without involving an advertising agency as in the prior art. Therefore, unlike the conventional advertisement, an intermediate margin is not caused, which enables advertisement to be distributed at an appropriate price in accordance with advertising effects.

It is desirable that a bidding price be paid simultaneously with the notification of the results to a successful bidder. In the case where so-called "mischievous" bidding is conducted or bidding is conducted so as to bid the price up unduly, it is assumed that an advertisement sponsor will not be determined. In this case, provision of contents may be delayed, or a distribution fee of contents may be increased. According to a system in which a bidding price is paid simultaneously with the determination of a successful bidder, so-called "mischievous" bidding and the like can be excluded, so that the above-mentioned problems can be prevented previously.

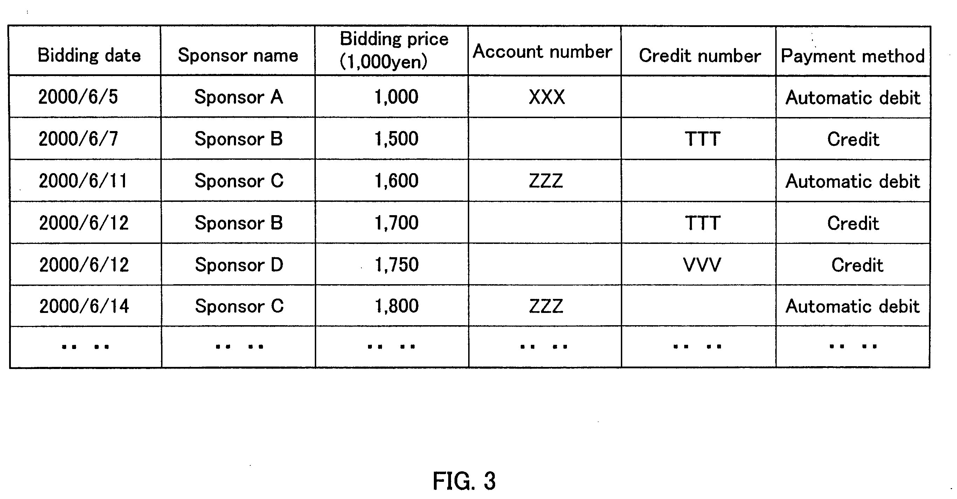

More specifically, a system is set so that bidding cannot be conducted without registering a bank account number or a credit card number for paying a bidding price, and a bidding price is debited from the bank account or paid by a credit card simultaneously with the notification of the determination of a successful bidder. In this case, the data structure of bidding information is, for example, as shown in Figure 3. Due to such a data structure, a payment and the like can be easily made, simultaneously with the determination of a successful bidder.

It is also assumed that bidding is not conducted, and no advertisement sponsors win a bid. Therefore, it is desirable to display, by default, a virtual sponsor, or an advertisement tenant similar to advertisement of an advertisement sponsor considered to be suitable for display as contents of the advertisement tenant. Because of this, contents can be provided to an audience without damaging the reality thereof. It may also be possible that advertisement of a contents creator is input, or advertisement for recruiting advertisement is input.

Further, reference numeral 4 denotes a contents creating part for studying how to use an advertisement tenant knocked down among advertisement sponsors, and updating display contents to those which are desired by the advertisement sponsor that has won the advertisement tenant. In general, an advertisement tenant is present in various manners. More specifically, it is a billboard displayed in the background, a building structure, a character, and the like. Thus, for example, an operation of updating display contents, such as providing an article name of an advertising object of a sponsor in the billboard displayed in the background, and changing a character to an article character, is required.

For example, in Figure 2, the artificial creature 22 is changed to a prominent character owned by an advertisement sponsor, or in the case where an advertisement sponsor is an automobile company, an operation of changing the car 21 to a car owned by an advertisement sponsor or the like is performed.

This is strictly limited to an updating operation with respect to an advertisement tenant, and a scenario of contents will not be changed. When the scenario is changed, an exposure frequency of an advertisement tenant is also changed. Consequently, bidding conditions are altered, and the correctness of a bidding price will be lost.

Reference numeral 5 denotes a contents distributing part for distributing contents, obtained by completing the adjustment with respect to an advertisement sponsor, regarding the advertisement tenant thus knocked down, and updating display contents, to a general audience. The contents may be distributed on the Internet, by digital broadcasting, or the like. More specifically, there is no particular limit to a distributing method, as long as it is capable of distributing digital contents.

It is also considered that, for example, contents and an advertisement tenant are separately distributed during distribution of contents. This prevents the contents from being activated unless the advertisement tenant is received, so that exact advertising effects can be expected.

A scenario of contents to be disclosed is not necessarily limited to one kind. More specifically, as in an audience-participating program often seen in a bidirectional digital medium, a scenario may have a selection in which the development of the scenario is changed by selection of an audience.

In this case, it is considered that an exposure frequency of an advertisement tenant is also changed by a change in a scenario. Accordingly, by disclosing how an exposure frequency of each advertisement tenant is changed by a change in a scenario when disclosing an outline of contents, an advertisement sponsor can determine a bidding price by its own judgement.

As a method for disclosing how an exposure frequency of each advertisement tenant is changed by a change in a scenario, for example, the following is considered: how an exposure frequency of each advertisement tenant is changed is stored as auxiliary information of the advertisement tenant; when the advertisement tenant displayed on a screen is clicked on with a mouse or the like, a price input screen is displayed, together with a disclosure of information on an exposure frequency and the like of the advertisement tenant in the entire contents. It should be understood that the disclosing method is not limited thereto.

According to a system with the above-mentioned structure, a contents distributor can widely recruit advertisement sponsors without involving an intermediator such as an advertising agency, so that an appropriate income for advertisement can be obtained. Further, contents can be created based on a free idea without depending upon an advertisement sponsor.

Further, an advertisement sponsor can cut an intermediate cost, since an intermediator such as an advertising agency is not required. An advertisement sponsor also obtains an opportunity of previously determining advertising effects on its own authority so as to avoid investment in creation of contents of which effects cannot be expected.

Further, a bidding price of an advertisement sponsor is earmarked for part of a distribution fee of contents, so that a general audience can receive distribution of contents at a relatively low price. In addition, commercial contents are not inserted between contents, so that there is a merit that a general audience can concentrate on the contents.

In the case where once distributed contents are redistributed (for example, a program in digital broadcasting is rebroadcast, or the like), it is considered that advertisement sponsors are recruited again by auction. Although once distributed contents are likely to be obsolete to an audience, the contents thereof may be full in such a manner as to draw interest again and again. It is natural that the judgement of advertising effects are left to each advertisement sponsor at a time of redistribution.

Further, in the case where commercial contents are inserted between contents as in the prior art, a distribution ratio of commercial contents may be varied, depending upon the situation during distribution of contents. However, in Embodiment 1, the advertising effects are provided to the contents, so that an advertisement sponsor can exactly expect advertising effects in accordance with a bidding price.

As described above, in Embodiment 1, unlike the prior art, a contents creator can directly deal with an advertisement sponsor, whereby contents to be distributed can be used as an advertisement medium. Therefore, a contents distributor can expect an appropriate income for advertisement, and an advertisement sponsor can cut an intermediate cost. Further, a bidding price of an advertisement sponsor can be earmarked for part of a distribution fee of contents, so that a general audience can receive contents at a relatively low price.

Hereinafter, a digital contents advertisement display system using auction in Embodiment 2 of the present invention will be described with reference to the drawings. It is assumed that contents to be provided are a drama having a fixed scenario. It should be noted that the contents do not necessarily require a scenario.

Further, a character in the present embodiment refers to an idea including general things, and includes an artificial creature and the like that are artificially created, as well as a car, a TV, and other things.

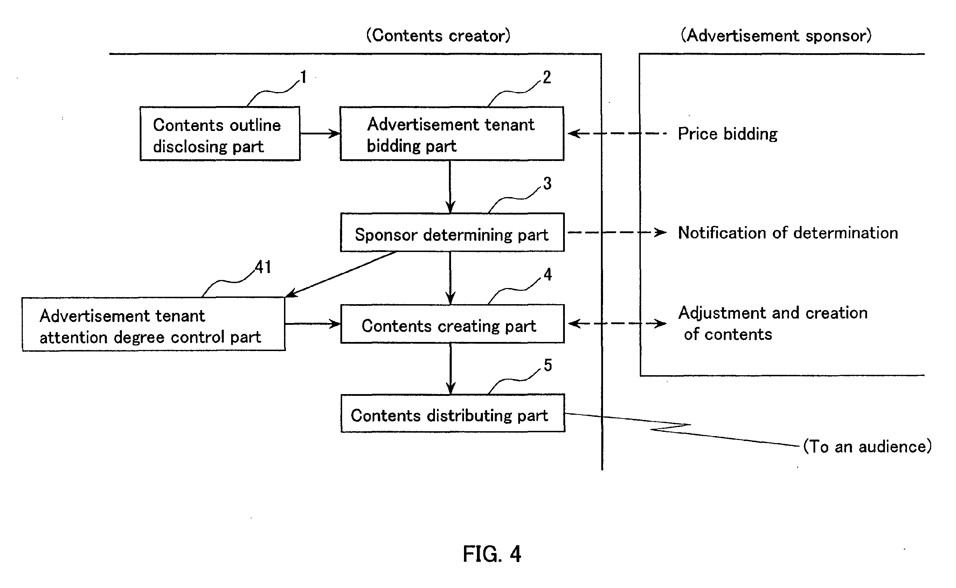

Figure 4 is a block diagram of a digital contents advertisement display system using auction in Embodiment 2 of the present invention. In actual implementation, components shown in Figure 4 may be composed of dedicated devices. It may also be possible that processing steps are described as computer software using a CPU, a memory, and the like.

The basic structure in Figure 4 is the same as that in Figure 1. The difference therebetween is that the degree of attention to an advertisement tenant through a character or the like can be changed. In Embodiment 2, a scenario of contents is not changed in the same way as in Embodiment 1. However, by changing the size of an advertisement tenant, for example, by changing a camerawork or the like, or by changing the position at which a character is displayed in the contents, an advertisement tenant can be adjusted so as to be well paid attention to by an audience.

A specific structure will be described. Referring to Figure 4, reference numeral 41 denotes an advertisement tenant attention degree control part, which has a function of controlling the degree of attention to an advertisement tenant in the contents. For example, by changing the display size of an advertisement tenant in the contents by adjustment of a camera position, the degree of attention to the advertisement tenant can be changed without changing a scenario. More specifically, for example, in a scene where a main character is looking for something, adjustment such as displaying the advertisement tenant in a larger size is made, whereby an audience naturally notices the advertisement tenant.

It is preferable that such adjustment is conducted in accordance with a bidding price of an advertisement sponsor. More specifically, by setting a rule that the degree of attention to an advertisement tenant for which bidding price is highest is increased in a scene in the contents, a contents creator can expect a further increase in an advertising fee.

Of course, regarding the adjustment of the degree of attention, various methods as well as the change in size of an advertisement tenant can be considered. For example, by controlling the behavior of a character, the same effects can be expected.

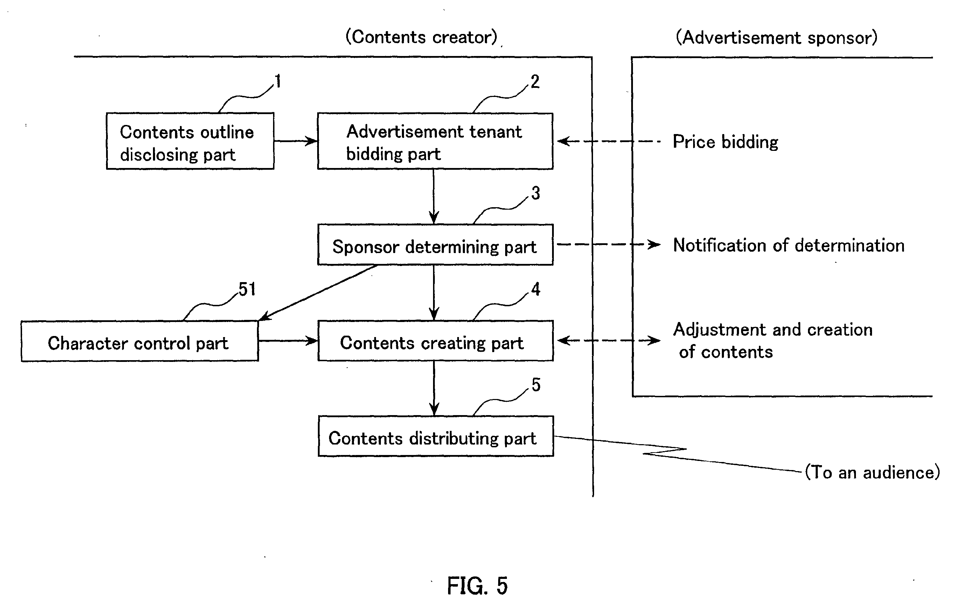

Figure 5 is a block diagram of a digital contents advertisement display system using auction of the present invention in which the degree of attention to an advertisement tenant is enhanced by controlling the behavior of a character.

In Figure 5, reference numeral 51 denotes a character control part, which controls the behavior of a character. Regarding how a character behaves under which conditions, advertising effects are varied depending upon respective contents, so that there is no particular limit to the control of the behavior of a character. In Embodiment 2, for example, by controlling the position at which a character is displayed, rendering the movement of a character active, and the like, the degree of attention to an advertisement tenant present in the vicinity of the character can be enhanced.

As described above, in Embodiment 2, the degree of attention to an advertisement tenant can be changed in accordance with a bidding price of an advertisement sponsor without changing a scenario of contents. Therefore, an advertisement sponsor can expect that advertising effects are exhibited in accordance with an advertising cost, and a contents creator can ensure an appropriate bidding price.

Hereinafter, a digital contents advertisement display system using auction in Embodiment 3 of the present invention will be described with reference to the drawings. In the same way as in Embodiment 1, it is assumed that contents to be provided are a drama having a fixed scenario. It should be noted that the contents do not necessarily require a scenario.

Further, a character in the present embodiment refers to an idea including general things, and includes an artificial creature and the like that are artificially created, as well as a car, a TV, and other things.

In Embodiment 3, the advertising effects of an advertisement tenant are grasped by statistical analysis of the behavior of a character, as well as an access frequency with respect to the advertisement tenant. More specifically, statistical information regarding a statistical value of an access time with respect to a character in bidirectional contents, which advertisement tenant a character is positioned close to, and the like are obtained, whereby the trends of a general audience are fed back to an advertisement sponsor.

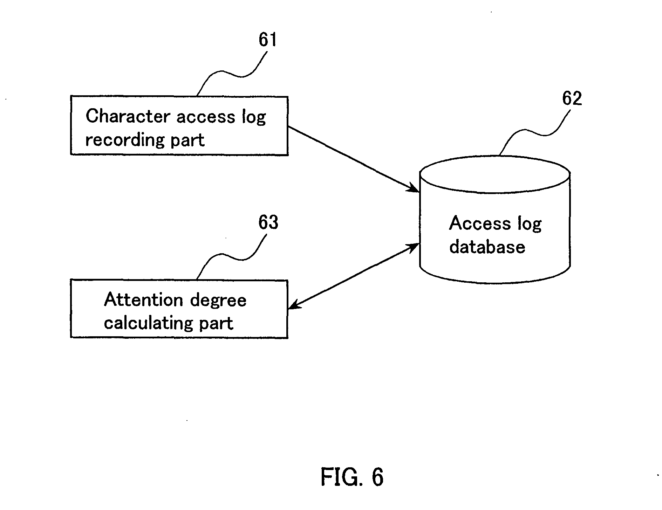

Figure 6 is a block diagram of an advertising effect calculating part in the digital contents advertisement display system using auction in Embodiment 3 of the present invention. In actual implementation, components shown in Figure 6 may be composed of dedicated devices. It may also be possible that processing steps are described as computer software using a CPU, a memory, and the like. In Figure 6, reference numeral 61 denotes a character access log recording part, 62 denotes a character access log database, and 63 denotes an attention degree calculating part, respectively.

The character access log recording part 61 records statistical information when a general audience gains access to a character, in the character access log database 62. The attention degree calculating part 63 calculates an index representing the degree of attention to an advertisement tenant, based on the information recorded in the character access log database 62.

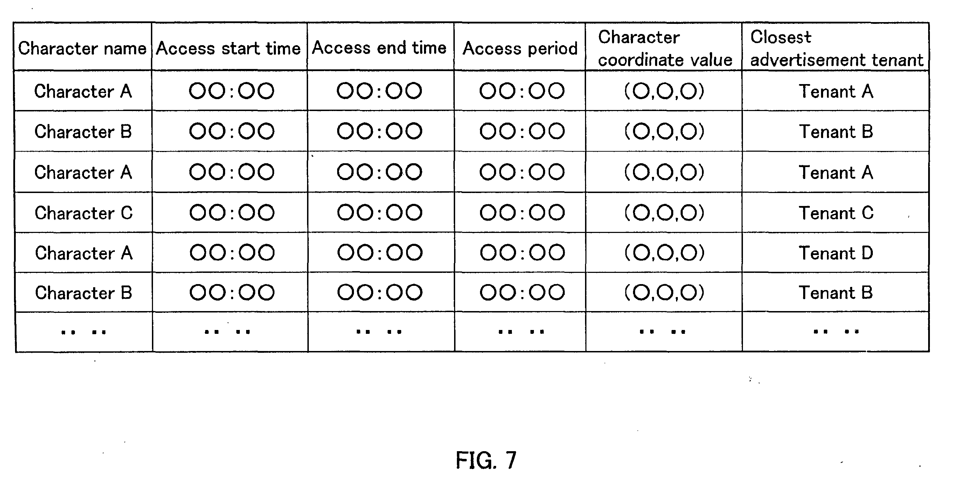

As the simplest example, it is considered that information is recorded with a data structure as shown in Figure 7 in the character access log database 62. More specifically, an access start time and an access end time are recorded on a character basis, and a period therebetween is calculated as an access period. At this time, the position of the character in contents is recorded at a virtual coordinate value in the contents, and an advertisement tenant in the vicinity thereof (closest thereto) is recorded, whereby it becomes possible to determine in which advertisement tenant the enhancement of advertising effects can be expected by access to the character.

A method for recording an access log to a character, and a method for calculating the degree of attention to an advertisement tenant are not limited thereto. Any method can be used as long as it is capable of calculating an index for an advertisement sponsor to grasp an actual degree of attention. Further, a method for regularly reporting the index to an advertisement sponsor may be used. Alternatively, a method for allowing an advertisement sponsor to obtain the index at an arbitrary timing may be used.

As described above, in Embodiment 3, the trends of an audience with respect to a character are statistically analyzed, whereby it becomes possible to exactly grasp whether or not advertising effects expected by an advertisement sponsor are ensured.

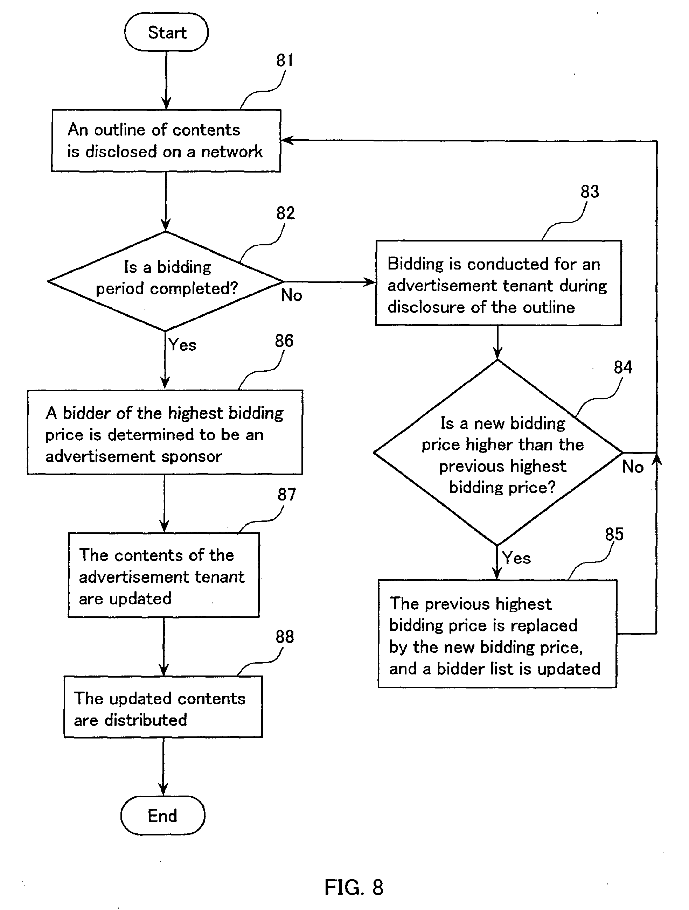

Next, processing of a program for realizing the digital contents advertisement display system using auction in the embodiment of the present invention will be described. Figure 8 shows a flow chart illustrating processing of a program for realizing the digital contents advertisement display system using auction in the embodiment of the present invention.

First, an outline of contents to be distributed is disclosed on a network in the form of a digest or the like (Operation 81). A disclosed predetermined period becomes a bidding period with respect to advertisement sponsors.

If the bidding period is not completed (Operation 82: No), and an advertisement sponsor conducts bidding with respect to an advertisement tenant in the contents (Operation 83), a new bidding price of the advertisement sponsor is compared with the highest bidding price among the previous bidding prices (Operation 84). In the case where the new bidding price is higher than the previous highest bidding price (Operation 84: Yes), the new bidding price is determined as the new highest bidding price, and a bidder list is updated by including the new bidder of the new highest bidding price (Operation 85). If the new bidding price is lower than or equal to the previous highest bidding price (Operation 84: No), neither a bidding price list nor a bidder list are updated, and the process returns to Operation 82. Thus, in the case where the new bidding price is equal to the previous highest bidding price, a bidder who has conducted bidding earlier is given priority.

When the bidding period is completed (Operation 82: Yes), the recorded bidder of the highest bidding price is determined to be an advertisement sponsor of the advertisement tenant (Operation 86).

When the advertisement sponsor is determined, the contents of the advertisement tenant are updated while adjustment with respect to a contents creator is being made (Operation 87), and the updated contents are distributed (Operation 88).

A recording medium storing a program for realizing the digital contents advertisement display system using auction in the embodiment of the present invention may be a storage apparatus 91 provided at the end of a communication line or a recording medium 94 such as a hard disk and a RAM of a computer 93, as well as a portable recording medium 92 such as a CD-ROM 92-1 and a floppy disk 92-2. In execution, the program is loaded, and executed on a main memory.

A program for displaying an outline of contents or conducting bidding/winning a bid, a program for completing an advertisement tenant, and a program for executing distribution of contents may be integrated with each other, or may be independent of each other.

A recording medium storing access log data and the like generated by the digital contents advertisement display system using auction in the embodiment of the present invention may also be a storage apparatus 91 provided at the end of a communication line or a recording medium 94 such as a hard disk and a RAM of a computer 93, as well as a portable recording medium 92 such as a CD-ROM 92-1 and a floppy disk 92-2. For example, such a recording medium is read by the computer 93, when the digital contents advertisement display system using auction of the present invention is utilized.

As described above, according to the digital contents advertisement display system using auction of the present invention, unlike the prior art, a contents creator can directly deal with an advertisement sponsor, whereby contents to be distributed can be used as an advertisement medium. Therefore, a contents distributor can expect an appropriate income for advertisement, and an advertisement sponsor can cut an intermediate cost. Further, a bidding price of an advertisement sponsor can be earmarked for part of a distribution fee of contents, so that a general audience can receive contents at a relatively low price.

Further, according to the digital contents advertisement display system using auction of the present invention, the degree of attention to an advertisement tenant can be changed in accordance with a bidding price of an advertisement sponsor without changing a scenario of contents. Therefore, an advertisement sponsor can expect that advertising effects are exhibited in accordance with an advertising cost, and a contents creator can ensure an appropriate bidding price.

Further, according to the digital contents advertisement display system using auction of the present invention, the trends of an audience with respect to a character are statistically analyzed, whereby it becomes possible to exactly grasp whether or not advertising effects expected by an advertisement sponsor are ensured.

Thus, the present invention provides a way of selling an advertising opportunity within digitally-distributed content such as a television programme. The advertising opportunity is called an "advertisement tenant" and may take the form of a predefined space within a frame of the digital content, product placement within scenes forming the digital content, or a character featured in the digital content (such as an animated cartoon character) capable of taking on one or more advertising attributes. Each advertising opportunity is auctioned to the highest bidder among an audience of advertising sponsors (potential advertisers) using a network which may be the same as that used to distribute the digital content. Once a particular advertising opportunity has been auctioned, the form of the advertisement is tailored to the winning sponsor in an interactive process, prior to distributing the finished digital content including the advertisement. The form of the advertisement (such as the appearance of a banner, or the amount of screen time of a character) may be varied during the course of running the digital content, and the reaction of an audience to the varying form may be monitored.

## Claims

1. A digital contents advertisement display system using auction, comprising:
a contents outline disclosing part for disclosing an outline of contents distributed through a digital medium to an indefinite number of audience including sponsors;
an advertisement tenant bidding part for allowing a sponsor to bid for an advertisement tenant contained in the disclosed contents;
a sponsor determining part for knocking down the advertisement tenant to the sponsor that has bid a highest price;
a contents creating part for correcting the advertisement tenant contained in the contents in accordance with requests from the sponsor, and completing the contents; and
a contents distributing part for distributing the completed contents,
wherein the contents have a function as an advertising medium.

2. A digital contents advertisement display system using auction according to claim 1, comprising a function of receiving an input from an audience and allowing the audience to influence a scenario process of the contents.

3. A digital contents advertisement display system using auction according to claim 1 or 2, wherein, in a case where an advertisement tenant is not determined in the sponsor determining part, the contents distributing part distributes the contents by using the advertisement tenant in the contents provided by default.

4. A digital contents advertisement display system using auction according to claim 1 or 2, further comprising a character control part for controlling behavior of a character displayed on a screen in accordance with a bidding price by the sponsor,
wherein the character behaves so that an audience pays more attention to the advertisement tenant for which the bidding price is higher.

5. A digital contents advertisement display system using auction according to claim 4, further comprising an access log recording part for recording an access log with respect to the character, and an attention degree calculating part for calculating a degree of attention to the advertisement tenant based on the access log recorded in the access log recording part,
wherein advertising effects can be measured based on the calculated degree of attention to the advertisement tenant.

6. A digital contents advertisement display system using auction according to claim 1 or 2, further comprising an advertisement tenant attention degree control part for changing a display of the advertisement tenant so that a degree of attention to the advertisement tenant in the contents is changed in accordance with the bidding price.

7. A digital contents advertisement display system using auction according to claim 6, wherein, in the advertisement tenant attention degree control part, a degree of attention to the advertisement tenant is changed by using the character.

8. A digital contents advertisement display system using auction according to claim 1 or 2, wherein, in a case where the contents are redistributed, advertisement sponsors of the advertisement tenant are auctioned again.

9. A computer-readable recording medium storing a program to be executed by a computer, for realizing a digital contents advertisement display system using auction, the program comprising:
disclosing an outline of contents to be distributed through a digital medium to an infinite number of audience including sponsors;
a sponsor bidding for an advertisement tenant contained in the disclosed contents;
knocking down the advertisement tenant to the sponsor that has bid a highest price;
correcting the advertisement tenant contained in the contents in accordance with requests from the sponsor, and completing the contents; and
distributing the completed contents,
wherein the contents have a function as an advertising medium.

10. A computer program which, when run on a computer, causes the computer to become the system as claimed in any one of claims 1 to 8.

## Amended claims

### Amended claims in accordance with Rule 86(2) EPC.

**1.** A digital contents advertisement distribution system composed of a computer including a CPU, a memory, and a display apparatus, comprising:
a contents outline disclosing part for distributing, through a network, an advertisement outline including at least one advertisement tenant created as digital contents to a number of people who are potential advertisement sponsors;
an advertisement tenant bidding part for presenting a price input screen containing information on the advertisement tenant to those among said number of people who desire to be sponsors with respect to right of use of the advertisement tenant contained in the advertisement outline, and for receiving an input of a bidding price;
a sponsor determining part for determining a person who has input the highest bidding price as the sponsor of the advertisement tenant;
a contents creating part for updating the advertisement tenant contained in the digital contents to an advertisement tenant desired by the sponsor, and completing the digital contents; and
a contents distributing part for distributing the completed digital contents advertisement through the network,
whereby the digital contents advertisement containing the advertisement tenant of the sponsor determined by bidding is created and distributed.

**2.** A digital contents advertisement distribution system according to claim 1, comprising a function of receiving an input influencing a change in a scenario of the digital contents from an audience,
wherein the advertisement tenant bidding part presents a price input screen containing an exposure frequency of an advertisement tenant varied depending upon scenario progression, in said information on the advertisement tenant,

**3.** A digital contents advertisement distribution system according to claim 1 or 2, wherein, in a case where there is an advertisement tenant for which the sponsor to be provided with the right of use of the advertisement tenant cannot be determined in the sponsor determining part,
the contents creating part completes the digital contents using the advertisement tenant contained in the digital contents provided by default, regarding the advertisement tenant.

**4.** A digital contents advertisement distribution system according to claim 1 or 2, further comprising a character control part for controlling behavior containing a display position and a movement of a character displayed on a screen in accordance with the price bid by the sponsor with respect to the advertisement tenant, so that an audience pays more attention to the advertisement tenant for which the price bid is higher.

**5.** A digital contents advertisements distribution system according to claim 1 or 2, further comprising an advertisement tenant attention degree control part for changing a display of the advertisement tenant so as to vary an attention degree in the digital contents of the advertisement tenant based on a predetermined rule, in accordance with the price bid by the sponsor with respect to the advertisement tenant.

**6.** A digital contents advertisement distribution system according to claims 4 and 5, wherein, in the advertisement tenant attention degree control part, a degree of attention to the advertisement tenant is changed by changing the display of the character.

**7.** A digital contents advertisement distribution system according to claim 4, further comprising an access log recording part for recording an access log with respect to the character by an audience and statistical information thereof in an access log database, and an attention degree calculating part for calculating an attention degree to the advertisement tenant based on the access log and statistical information recorded in the access log database,
wherein advertisement effects can be measured based on a calculated attention degree to the advertisement tenant.

**8.** A digital contents advertisement distribution system according to claim 1 or 2, wherein, in a case where the contents are distributed again, sponsors are recruited again with respect to the advertisement tenant.

**9.** A computer-readable recording medium storing a program to be executed by a computer including a CPU, a memory, and a display apparatus, for realizing a digital contents advertisement distribution system using auction, the program comprising program code means for:
distributing, through a network, an advertisement outline including at least one advertisement tenant created as digital contents to a number of people who are potential advertisement sponsors;
presenting a price input screen containing information on the advertisement tenant to those among said number of people who desire to be sponsors with respect to righ of use of the advertisement tenant contained in the advertisement outline, and receiving an input of a bidding price;
determining a person who has input a highest bidding price as the sponsor of the advertisement tenant;
updating the advertisement tenant contained in the digital contents to an advertisement tenant desired by the sponsor, and completing the digital contents; and
distributing the completed digital contents advertisement through the network,
whereby the digital contents advertisement containing the advertisement tenant of the sponsor determined by bidding is created and distributed.

**10.** A computer program which, when run on a computer, causes the computer to become the system as claimed in any one of claims 1 to 8.
